# EUROPÄISCHE PATENTSCHRIFT

(11) **EP 0 925 817 B1**
(45) Veröffentlichungstag und Bekanntmachung des Hinweises auf die Patenterteilung: **22.03.2006**
(21) Anmeldenummer: 98119896.3
(22) Anmeldetag: 21.10.1998
(51) Int. Cl.: B01D 29/11, B01D 29/64, B01D 29/68

(54) **Abspülbares Filter**
Rinsable filter
Filtre rinçable

(30) Priorität: 20.12.1997 DE 19757108
(43) Veröffentlichungstag der Anmeldung: 30.06.1999
(73) Patentinhaber: Hansgrohe AG, 77761 Schiltach (DE)
(72) Erfinder: Rehm, Albert, 82299 Türkenfeld (DE); Klass, Alfred, 82299 Türkenfeld (DE)
(74) Vertreter: Patentanwälte Ruff, Wilhelm, Beier, Dauster & Partner

(56) Entgegenhaltungen:
- WO-A-87/05005
- DE-B- 1 163 292
- DE-B- 1 247 272
- DE-C- 620 477
- US-A- 5 228 993

## Beschreibung

Die Erfindung geht aus von einer Anlage zur Wiederverwertung von leicht verschmutztem bereits einmal benutztem Wasser. Solches Wasser wird auch Grauwasser genannt. Bei Grauwasseranlagen muß das Wasser zunächst gefiltert werden, wobei gröbere mechanische Verunreinigungen beseitigt bzw. zurückgehalten werden. Zu diesen Verunreinigungen gehören Fusseln, Sand, Schuppen und so weiter.

Es ist bereits eine Grauwasseranlage mit einem Filter bekannt, bei der das trogartige Filter aus einer Filterstellung in eine zweite Stellung verschwenkt werden kann. Bei der Verschwenkung läuft das in dem Trog enthaltene Wasser aus.

Der Erfindung liegt die Aufgabe zugrunde, eine Möglichkeit zu schaffen, das insbesondere in eine Grauwasseranlage gelangende Wasser vor dem Einbringen in einen Speichertank vorzureinigen.

Zur Lösung dieser Aufgabe schlägt die Erfindung ein abspülbares Filter mit den Merkmalen des Anspruchs 1 vor. Weiterbildungen der Erfindung sind Gegenstand der abhängigen Ansprüche.

Das von der Erfindung vorgeschlagene Filter wird zwischen der Quelle für das schon einmal gebrauchte Wasser und den Speicherbehälter eingeschaltet. Die Filteranordnung filtert die gröberen Verunreinigungen, insbesondere mechanischer Art, heraus. Wenn die Leistung des Filters wegen einer zunehmenden Verschmutzung des Filters nachläßt, kann mit Hilfe der Spüleinrichtung das am Filter abgesetzte Material abgespült und in einen Ablauf in die Kanalisation geleitet werden. Dadurch wird die Filteranordnung wieder gesäubert, so daß dann die Leistung des Filters wieder auf den vollen Wert gebracht werden kann.

Die Spüleinrichtung dient dazu, die an dem eigentlichen Filterelement zurückgehaltenen Verschmutzungen von dem Filterelement abzuspülen, so daß sie dann weggespült werden können. Die Spüleinrichtung kann dies beispielsweise durch einen oder mehrere mit größerem Druck auftreffende scharfe Strahlen erreichen, die in der gleichen Richtung auf das Filterelement auftreffen wie das zu filternde Wasser. Wenn also das Filterelement ein ebenes Filtertuch oder Gitter ist, das von einer Seite aus durchströmt wird, so wird in diesem Fall das Filtertuch von der gleichen Seite her abgespült, also von der Vorderseite her. Es wird im folgenden als Filtrationsrichtung bezeichnet.

Es ist aber ebenfalls möglich und wird von der Erfindung vorgeschlagen, daß die Spüleinrichtung eine Rückspüleinrichtung ist, die das Filterelement bzw. die Filteranordnung in umgekehrter Richtung zu der Filtrationsrichtung beaufschlagt. Diese Richtung kann als Rückspülrichtung bezeichnet werden. Besonders günstig ist natürlich eine Kombination beider Möglichkeiten, bei der die Rückspülung den Filterrückstand löst. Wenn dieser nicht ganz gelöst wird, kann er dann von der Spülung in Filtrationsrichtung vollständig abgespült werden.

Insbesondere kann in Weiterbildung der Erfindung vorgesehen sein, daß das abspülbare Filter in einem äußeren Gehäuse angeordnet wird.

Es kann vorgesehen sein, daß der Auslaß des Filtrats aus dem Filter in den Zulauf der Grauwasseranlage führt, insbesondere auch zunächst in das Gehäuse und von dort in die Grauwasseranlage.

Erfindungsgemäß kann in Weiterbildung der Erfindung vorgesehen sein, daß der Schmutzwasserauslaß aus dem Filter in den Überlauf und somit zu der Abwasserleitung der Grauwasseranlage führt.

Das abspülbare Filter kann beispielsweise direkt an dem Waschbecken, der Badewanne oder der Duschwanne angeordnet werden, aus der das leicht verschmutzte Wasser entnommen wird. Besonders günstig ist es jedoch, wenn das Filter, insbesondere zusammen mit dem äußeren Gehäuse, im oberen Bereich eines Grauwasserspeichers angeordnet wird.

Nicht nur in diesem Fall ist es möglich, für die Spüleinrichtung Wasser zu verwenden, das der Grauwasseranlage entnommen wird, also schon gefiltertes Wasser. Natürlich ist es auch möglich, zum Spülen Leitungswasser zu verwenden. Da das abgespülte Wasser aber in den Ablauf gelangt, ist es sinnvoll, hierzu ebenfalls Grauwasser zu verwenden.

Insbesondere kann in Weiterbildung der Erfindung vorgesehen sein, daß die Filteranordnung ein zylindrisches Trommelfilter aufweist, das etwa radial durchströmt wird. Hier wird auf kleinem Raum eine große Filteroberfläche vorgesehen, die sich ebenfalls für eine gute Reinigung beim Ab- und Rückspülen anbietet.

Das zu filternde Wasser kann beispielsweise axial in das Innere des Trommelfilters geleitet werden und radial ausströmen. Ebenfalls möglich ist die umgekehrte Anordnung, bei der das zu filternde Wasser von außen nach innen radial einströmt und das Innere des Trommelfilters axial verläßt.

Es können auch innere und äußere Düsen vorhanden sein.

Die Erfindung schlägt vor, daß das Trommelfilter eine vertikale Zylinderachse aufweisen kann.

Erfindungsgemäß kann vorgesehen sein, daß das Trommelfilter in einem Behälter eingesetzt ist, der es überall mit gleichem radialen Abstand umgibt. Dadurch wird ein überall gleich breiter Ringraum geschaffen, der dazu führt, daß die Oberfläche des Filters überall gleich durchströmt wird, um zu einer gleichmäßigen Ablagerung der zurückgehaltenen Materialien zu führen.

Erfindungsgemäß kann vorgesehen sein, daß die Spüleinrichtung einen Strahl erzeugt, der nur einen begrenzten Bereich der Filteranordnung beaufschlagt. Bei dem Strahl kann es sich insbesondere um einen Sprühstrahl handeln, der also mit relativ großer Geschwindigkeit auftrifft. Um die ganze Filteranordnung abzuspülen, kann der Bereich über die ganze Filterfläche der Filteranordnung bewegt werden, wozu entweder der Strahl oder die Düse, aus der er austritt, über die Filterfläche bewegt wird, oder aber die Filterfläche gegenüber dem Strahl bzw. der Düse bewegt wird. Selbstverständlich ist es auch möglich, daß beide Teile bewegt werden.

In Weiterbildung der Erfindung kann vorgesehen sein, daß die Rückspüleinrichtung auch einen Strahl erzeugt, der die Filteranordnung in Filtrationsrichtung beaufschlagt, wobei dieser Strahl vorzugsweise als scharfer Sprühstrahl ausgebildet ist und/oder die Filteranordnung schräg oder tangential trifft. Mit Hilfe dieses Strahles kann das abgelagerte Material entfernt werden, was sich durch das schräge Auftreffen verbessern läßt. Dieser schräg auftreffende Strahl kann ebenfalls dazu dienen, das Trommelfilter in Drehung zu versetzen. Wird die Drehgeschwindigkeit zu groß, kann das Trommelfilter mit einer Fliehkraftbremse ausgestattet werden, die bei erhöhter Drehzahl nach außen bewegt wird und an der Außengehäusewandung bremst. Diese Bremse kann auch als Hydraulikbremse ausgebildet sein.

Insbesondere kann erfindungsgemäß vorgesehen sein, daß die von beiden Seiten auf das Filter auftreffenden Strahlen etwa an der gleichen Stelle auftreffen, um sich dadurch gegenseitig zu unterstützen.

Erfindungsgemäß kann vorgesehen sein, daß die Filtertrommel während des Rückspülens rotierend angetrieben wird, während der Sprühstrahl, sowohl der von der rückwärtigen Seite des Filters als auch der von der Vorderseite des Filters, stehen bleibt.

Die Erfindung schlägt vor, daß die Rückspüleinrichtung eine Druckversorgung, insbesondere eine Pumpe aufweist. Es ist vorgesehen, daß die Druckversorgung sowohl die Sprühdüsen speist als auch gleichzeitig eine Wasserstrahlpumpe betreibt, die das Schmutzwasser mit dem Filterrückstand absaugt. Die Druckversorgung kann eine Pumpe sein oder das Trinkwassernetz. Die Saugpumpe kann auch eine herkömmliche Pumpe sein.

Der Wasserstand in dem eingangs erwähnten Ringraum kann dazu verwendet werden, eine Auslösung der Rückspüleinrichtung zu steuern.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen senkrechten Schnitt durch ein rückspülbares Filter nach der Erfindung;
- Fig. 2: einen horizontalen Schnitt durch das Filter etwa nach Linie II-II in Fig. 1.

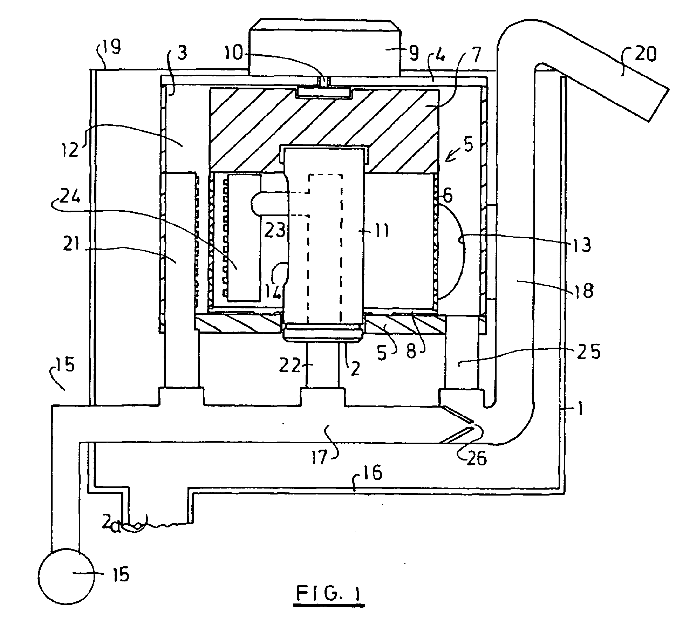

Fig. 1 zeigt, teilweise im Schnitt und schematisch, einen vertikalen Teilschnitt durch ein rückspülbares Filter, wie es von der Erfindung vorgeschlagen wird. Das Filter kann in einem äußeren Gehäuse 1 angeordnet sein. Das Gehäuse 1 enthält an seiner Unterseite eine Auslaßöffnung 2a, durch die das in dem Inneren des Gehäuses 1 vorhandene Wasser ablaufen oder zu einem entfernt liegenden Speicherbehälter gepumpt werden kann. Das Gehäuse ist mit Ausnahme der Auslaßöffnung 2a geschlossen, weist jedoch eine offene Oberseite auf. Das Filter könnte auch direkt in dem Speicher einer Grauwasseranlage angeordnet sein.

In dem Gehäuse 1 ist ein kreiszylindrischer Behälter 3 untergebracht, der einen geschlossenen Deckel 4 und einen Boden 5 mit mehreren Öffnungen aufweist. Konzentrisch zu dem Behälter 3 ist in diesem eine Filteranordnung 5 angeordnet, die ein Trommelfilter 6 aufweist. Das Trommelfilter 6 ist zwischen einem Kopfteil 7 und einem Boden 8 der Filteranordnung 5 eingespannt. Das Trommelfilter besteht beispielsweise aus feinmaschigem Geflecht.

An dem Deckel 4 des Behälters 3 ist ein Elektromotor 9 befestigt, der durch den Deckel 4 mit seiner Achse 10 hindurchgreift und zum Drehantrieb des Kopfteils 7 der Filteranordnung 5 ausgebildet und bestimmt ist.

In dem Boden 5 des Behälters 3 ist abgedichtet eine hohle Buchse 11 angeordnet, die so mit dem Boden 5 verbunden ist, daß sie von diesem gehalten wird. Die Buchse 11 weist keinen Boden auf, kann also vom Wasser axial durchströmt werden. Dies bildet einen Auslaß 2.

Zwischen dem Trommelfilter 6 und der Außenwand des Behälters 3 ist ein Ringraum 12 gebildet, der das Trommelfilter 6 allseits umgibt.

Der Behälter 3 weist in seiner Außenwand eine Einlaßöffnung 13 auf, durch die das zu filtrierende Wasser in den Ringraum 12 eindringen kann. Das Wasser verteilt sich in dem Ringraum 12 gleichmäßig um den Umfang des Trommelfilters 6 herum und strömt durch das Trommelfilter 6 radial von außen nach innen. In dem zu filternden Wasser enthaltene Verunreinigungen, wie schwebende Teilchen, bleiben dabei an der Außenseite der Filteranordnung 5 hängen. Das gefilterte Wasser tritt durch seitliche Öffnungen 14 in die Buchse 11 ein und gelangt von dieser durch deren offene Unterseite in das Innere des Gehäuses 1 und von dort durch die Auslaßöffnung 2 in den Brauchwasserspeicher.

Mit dem Behälter 3 ist eine Rückspüleinrichtung verbunden, die eine Pumpe 15 enthält. Die Pumpe pumpt Wasser, das aus dem Grauwasserspeicher stammen kann, in ein im Innern des Gehäuses 1 oberhalb von dessen Boden 16 angeordnetes Rohr 17. Das Rohr 17 führt bis zu der der Pumpe 15 abgewandten Seite des Gehäuses 1 und von dort parallel zur Zylinderachse des Gehäuses 1 in einem aufsteigenden Ast 18 nach oben, bis über die Oberkante 19 des Gehäuses 1. Dort ist das Rohr schräg nach unten abgewinkelt. Das Auslaßende 20 des Rohres führt dann zu der Kanalisation.

Von dem horizontalen Ast 17 des Rohres führen vertikal drei Rohre durch den Boden 5 des Behälters 3 in diesen. Ein Rohr 21 führt nach oben in den Ringraum 12 bis in eine Höhe, die etwa der oberen Kante des Trommelfilters 6 gleich ist. In der dem Trommelfilter 6 zugewandten Seite sind Auslaßöffnungen zur Bildung von Strahlen untergebracht. Wenn die Pumpe 15 betrieben wird, werden hier Strahlen erzeugt, die das zurückgehaltene Material von der in Strömungsrichtung gesehen Vorderseite des Filters abspülen.

Von dem Rohr 17 geht ein zweiter Rohrstutzen 22 konzentrisch nach oben in die Buchse 11 und von dort über eine Abzweigung 23 in ein weiteres Rohrstück 24, das in Umfangsrichtung gesehen etwa an der gleichen Stelle angeordnet sein kann wie das äußere Rohrstück 21 und ebenfalls mit Sprühdüsen ausgestattet ist. Die beiden Rohrstücke 21, 24 schließen einen bestimmten Bereich des Filters zwischen sich ein. Beim Betreiben der Pumpe 15 verlassen Strahlen das Rohr 24 und werden in umgekehrter Richtung durch das Filter hindurch bewegt. Dadurch wird in Zusammenwirken mit den von außen auftreffenden Strahlen eine Reinigung und Rückspülung des Filters an dieser Stelle bewirkt. Das zurückgespülte Wasser steht zunächst in dem Ringraum 12. Ein kurzer Rohrstutzen 25 führt von dem unteren Rohr 17 ebenfalls in den Ringraum, jedoch nur bis zu dessen Boden. Vor der Abzweigung zu diesem Rohrstutzen 25 ist eine Strömungsverengung 26 in dem Rohr 17 gebildet, die eine Wasserstrahlpumpe bildet. Die Pumpe saugt also das Wasser aus dem Ringraum 12 und befördert es durch den aufsteigenden Ast 18 zu dem Auslaß 20. Während dieses Rückspülvorgangs treibt der Motor 9 über die Welle 10 die gesamte Filteranordnung 5 rotierend an, so daß die Rückspülung und das Reinigen der Außenseite an allen Stellen des Trommelfilters 6 nach und nach auftritt.

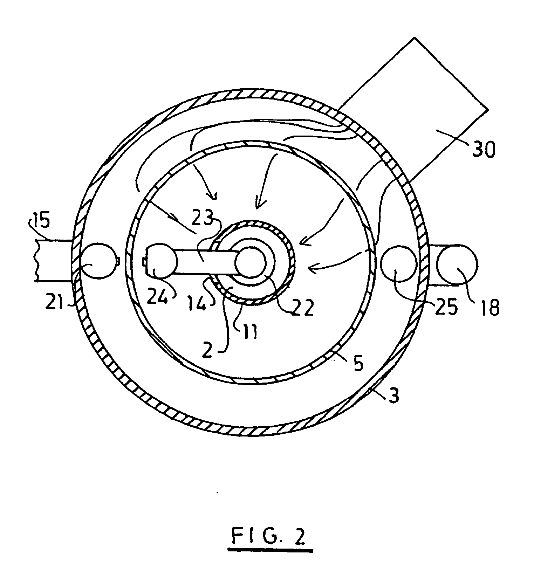

Fig. 2 zeigt einen Querschnitt durch den Behälter 3 und die Filteranordnung 5. Die Rohrstutzen 21, 24, 22, 25 und der aufsteigende Ast 18 liegen alle auf einer Linie. Der Weg des zu filternden Wassers ist durch die Pfeile angedeutet. Beim Zurückspülen fließt das Wasser, wie bereits erwähnt, nur an einer bestimmten Stelle durch das Trommelfilter, die durch die beiden Rohrstutzen 21, 24 bestimmt wird.

Wenn sich das Filter während des Betriebs der Anlage nach und nach zusetzt, führt dies dazu, daß bei weiteren Zulauf von Wasser durch die Öffnung 13 der Wasserstand in dem Ringraum 12 ansteigt. Das Ansteigen des Wasserstands oder anders ausgedrückt ein Wasserstand, der eine bestimmte Marke überschreitet, kann dazu verwendet werden, den Betrieb der Pumpe 15 und damit den Rückspülvorgang auszulösen. Selbst dann, wenn der Ringraum 12 bis über die Oberkante des Filters mit Wasser gefüllt ist, kann eine Rückspülung ausgelöst werden. Denn die Pumpe 15 befördert ja das in dem Ringraum 12 stehende Wasser auch zu dem Auslaß 20, so daß dann der Ringraum von Wasser geleert wird und die eigentliche Rückspülung besser arbeitet.

## Patentansprüche

1. Abspülbares Filter, insbesondere für Grauwasseranlagen, mit
1.1 einem Einlass (30) für das zu filternde Wasser,
1.2 einer Filteranordnung (5), die
1.2.1 von dem zu filternden Wasser in einer ersten Richtung durchströmbar ist,
1.3 einem Auslass (2) für das gefilterte Wasser,
1.4 einer Spüleinrichtung, die zum Wegspülen von Verschmutzungen der Filteranordnung ausgebildet ist, sowie mit
1.5 einem Auslass (20) für das rückgespülte Wasser, wobei
1.6 die Spüleinrichtung eine Druckversorgung insbesondere mit einer Pumpe (15) zur Erzeugung von Druck für die Spülung aufweist,
**dadurch gekennzeichnet, dass**
1.7 die Druckversorgung der Spüleinrichtung derart ausgebildet ist, dass sie Unterdruck für die Absaugung des Schmutzwassers mit dem Filterrückstand erzeugt.

2. Filter nach Anspruch 1, bei dem die Spüleinrichtung als Rückspüleinrichtung und derart ausgebildet ist, dass sie Wasser in umgekehrter Richtung durch die Filteranordnung (5) strömen lässt.

3. Filter nach Anspruch 1 oder 2, bei dem die Spüleinrichtung derart ausgebildet ist, dass sie die Filteranordnung mit Hilfe mindestens eines Sprühstrahls abspült, der in der gleichen Strömungsrichtung auf die Filteranordnung trifft wie das zu filtrierende Wasser.

4. Filter nach einem der vorhergehenden Ansprüche, mit einem äußeren Gehäuse (1).

5. Filter nach einem der vorhergehenden Ansprüche, bei dem der Auslass (2) aus dem Filter in das Gehäuse (1) und von dort in den Zulauf der Grauwasseranlage führt.

6. Filter nach einem der vorhergehenden Ansprüche, bei dem der Schmutzwasserauslass (20) zu dem Abwasserauslauf der Grauwasseranlage führt.

7. Filter nach einem der vorhergehenden Ansprüche, bei dem das Filter, insbesondere das Gehäuse (1), direkt in dem Speicher der Grauwasseranlage angeordnet ist, vorzugsweise in dessen oberem Bereich.

8. Filter nach einem der vorhergehenden Ansprüche, bei dem die Spüleinrichtung derart ausgebildet ist, dass sie zum Spülen Wasser aus dem Grauwasserspeicher verwendet.

9. Filter nach einem der vorhergehenden Ansprüche, bei dem die Filteranordnung (5) ein zylindrisches Trommelfilter (6) aufweist, das etwa radial durchströmbar ist, wobei insbesondere eine axiale Stirnfläche in das Trommelfilter (6) für das zu filternde Wasser und eine axiale Stirnfläche aus dem Trommelfilter (6) für das gefilterte Wasser vorgesehen ist, insbesondere mit einer Öffnung (2) in dieser.

10. Filter nach Anspruch 9, bei dem das Trommelfilter (6) eine vertikale Zylinderachse auf weist.

11. Filter nach einem der Ansprüche 9 oder 10, bei dem das Trommelfilter (6) in einem einen Ringraum (12) bildenden Behälter (3) eingesetzt ist.

12. Filter nach einem der vorhergehenden Ansprüche, bei dem die Spüleinrichtung derart ausgebildet ist, dass sie einen Strahlfächer erzeugt, der nur eine begrenzte Fläche der Filteranordnung (5) beaufschlagt und über die ganze Filterfläche der Filteranordnung (5) bewegt wird.

13. Filter nach einem der vorhergehenden Ansprüche, bei dem die Spüleinrichtung derart ausgebildet ist, dass sie einen Strahlfächer erzeugt, der die Filteranordnung (5) in Filtrationsrichtung beaufschlagt, vorzugsweise als scharfer und/oder tangentialer bzw. schräger Sprühstrahl.

14. Filter nach Anspruch 13, bei dem die beiden Strahlen der Spüleinrichtung etwa auf die gleiche Stelle der Filteranordnung (5) gerichtet sind, wobei insbesondere der Strahlfächer in Filtrationsrichtung die Filteranordnung an einer Stelle trifft, die in Bewegungsrichtung hinter der Stelle des Strahlfächers in Rückspülrichtung angeordnet ist.

15. Filter nach einem der Ansprüche 9 bis 14, bei dem das Trommelfilter (6) während des Spülens rotierend antreibbar ist.

16. Filter nach einem der vorhergehenden Ansprüche, bei dem der Wasserstand in Strömungsrichtung vor der Filteranordnung (5) zur Auslösung eines Spülvorgangs benutzbar ist.

## Claims

1. Rinsable filter, especially for gray water systems, with
1.1 an inlet (30) for the water to be filtered,
1.1 a filter arrangement (5)
1.2.1 through which the water to be filtered can flow in a first direction,
1.3 an outlet (2) for the filtered water,
1.4 a rinsing device that is designed to rinse out contamination from the filter arrangement, and with
1.5 an outlet (20) for the back-flushed water, wherein
1.6 the rinsing device has a pressure supply, especially with a pump (15), to generate pressure for rinsing,
**characterized in that**
1.7 the pressure supply for the rinsing device is designed so that it generates a vacuum to draw the waste water with the filter residue.

2. Filter according to claim 1, wherein the rinsing device is designed as a backflushing device and allows water to flow in reverse direction through the filter arrangement (5).

3. Filter according to claim 1 or 2, wherein the rinsing device is designed so that it rinses the filter arrangement with the aid of at least one spray jet that contacts the filter arrangement in the same direction as the flow of the water to be filtered.

4. Filter according to one of the prior claims with an external housing (1).

5. Filter according to one of the prior claims, wherein the outlet (2) leads out of the filter into the housing (1) and from there into the feed of the gray water system.

6. Filter according to one of the prior claims, wherein the dirty water outlet (20) leads to the waste water outlet of the gray water system.

7. Filter according to one of the prior claims, wherein the filter, especially the housing (1), is located directly in the reservoir of the gray water system, preferably in its top area.

8. Filter according to one of the prior claims, wherein the rinsing device is designed so that it uses water from the gray water reservoir for rinsing.

9. Filter according to one of the prior claims, wherein the filter arrangement (5) has a cylindrical drum filter (6) through which a liquid can flow more or less radially, whereby in particular an axial face is provided leading into the drum filter (6) for the water to be filtered, and an axial face leading out of the drum filter (6) is provided for the filtered water, and an opening (2) is especially provided therein.

10. Filter according to claim 9, wherein the drum filter (6) has a vertical cylindrical axis.

11. Filter according to one of Claims 9 or 10, wherein the drum filter (6) is inserted in a container (3) forming an annular space (12).

12. Filter according to one of the prior claims, wherein the rinsing device is designed so that it generates a jet fan that only contacts a limited surface of the filter arrangement (5) and is moved over the entire filter surface of the filter arrangement (5).

13. Filter according to one of the prior claims, wherein the rinsing device is designed so that it generates a jet fan that contacts with the filter arrangement (5) in the direction of filtration, preferably as a sharp and/or tangential or angled spray jet.

14. Filter according to claim 13, wherein the two jets from the rinsing device are directed approximately at the same location of the filter arrangement (5), whereby in particular the jet in the direction of filtration contacts the filter arrangement at a site that, viewed from the direction of movement, is behind the site of the jet and in the back-wash direction.

15. Filter according to one of claims 9 to 14, wherein the drum filter (6) is driven to rotate during rinsing.

16. Filter according to one of the prior claims, wherein the water level in the direction of flow before the filter arrangement (5) is used to trigger rinsing.

## Revendications

1. Filtre lavable, en particulier pour stations d'épuration d'eaux usées, comprenant
1.1 une entrée (30) pour l'eau à filtrer,
1.2 un dispositif de filtrage (5) qui
1.2.1 peut être traversé dans une première direction par l'eau à filtrer,
1.3 une sortie (2) pour l'eau filtrée,
1.4 un dispositif de lavage qui est conçu pour enlever les souillures du dispositif de filtrage par lavage, ainsi qu'
1.5 une sortie (20) pour l'eau lavée à contre-courant,
1.6 le dispositif de lavage présentant un dispositif d'alimentation en pression, en particulier doté d'une pompe (15) destinée à générer la pression pour le lavage,
**caractérisé en ce que**
1.7 le dispositif d'alimentation en pression du dispositif de lavage est conçu de telle manière qu'il génère une dépression pour l'aspiration de l'eau sale avec les résidus de filtrage.

2. Filtre selon la revendication 1, dans lequel le dispositif de lavage est réalisé en tant que dispositif de lavage à contre-courant et de telle manière qu'il peut faire circuler l'eau en sens inverse à travers le dispositif de filtrage (5).

3. Filtre selon la revendication 1 ou 2, dans lequel le dispositif de lavage est réalisé de telle manière qu'il lave le dispositif de filtrage à l'aide d'au moins un jet de pulvérisation qui atteint le dispositif de filtrage dans la même direction d'écoulement que l'eau à filtrer.

4. Filtre selon l'une quelconque des revendications précédentes, comprenant un boîtier extérieur (1).

5. Filtre selon l'une quelconque des revendications précédentes, dans lequel la sortie (2) du filtre mène dans le boîtier (1) et, de là, dans l'entrée de la station d'épuration d'eaux usées.

6. Filtre selon l'une quelconque des revendications précédentes, dans lequel la sortie (20) des eaux sales mène à la sortie des eaux usées de la station d'épuration.

7. Filtre selon l'une quelconque des revendications précédentes, dans lequel le filtre, en particulier le boîtier (1), est disposé directement dans le réservoir de la station d'épuration des eaux usées, de préférence dans la partie supérieure de celui-ci.

8. Filtre selon l'une quelconque des revendications précédentes, dans lequel le dispositif de lavage est réalisé de telle manière qu'il est utilisé pour le lavage de l'eau du réservoir des eaux usées.

9. Filtre selon l'une quelconque des revendications précédentes, dans lequel le dispositif de filtrage (5) présente un filtre-tambour (6) cylindrique qui peut être traversé de manière à peu près radiale, en particulier une surface frontale axiale dans le filtre-tambour (6) étant prévue pour l'eau à filtrer et une surface frontale axiale hors du filtre-tambour (6) étant prévue pour l'eau filtrée, en particulier avec une ouverture (2) dans celle-ci.

10. Filtre selon la revendication 9, dans lequel l'axe du cylindre que constitue le filtre-tambour (6) est vertical.

11. Filtre selon la revendication 9 ou 10, dans lequel le filtre-tambour (6) est inséré dans un récipient (3) formant une chambre annulaire (12).

12. Filtre selon l'une quelconque des revendications précédentes, dans lequel le dispositif de lavage est réalisé de telle manière qu'il génère un jet en éventail qui frappe seulement une surface limitée du dispositif de filtrage (5) et est déplacé sur toute la surface filtrante du dispositif de filtrage (5).

13. Filtre selon l'une quelconque des revendications précédentes, dans lequel le dispositif de lavage est réalisé de telle manière qu'il génère un jet en éventail qui frappe le dispositif de filtrage (5) dans le sens de filtration, de préférence en tant que jet de pulvérisation focalisé et/ou tangentiel et incliné.

14. Filtre selon la revendication 13, dans lequel les deux jets du dispositif de lavage sont dirigés à peu près sur le même point du dispositif de filtrage (5), le jet en éventail atteignant en particulier le dispositif de filtrage, dans le sens de filtration, en un point qui, dans le sens de déplacement, est disposé derrière le point du jet en éventail dans le sens du lavage à contre-courant.

15. Filtre selon l'une quelconque des revendications 9 à 14, dans lequel le filtre-tambour (6) peut être entraîné en rotation pendant le lavage.

16. Filtre selon l'une quelconque des revendications précédentes, dans lequel le niveau d'eau dans le sens d'écoulement peut être utilisé, en amont du dispositif de lavage (5), pour déclencher une opération de lavage.
